Europäisches Patentamt

European Patent Office

Office européen des brevets

(11) Publication number: **0 189 556**
**B1**

(12)

# EUROPEAN PATENT SPECIFICATION

(45) Date of publication of patent specification: **05.10.88**

(21) Application number: **85115300.7**

(22) Date of filing: **03.12.85**

(51) Int. Cl.⁴: **F 16 H 1/445**

(54) Limited slip differential.

(30) Priority: **28.01.85 JP 10226/85 u**

(43) Date of publication of application:
**06.08.86 Bulletin 86/32**

(45) Publication of the grant of the patent:
**05.10.88 Bulletin 88/40**

(84) Designated Contracting States:
**DE FR GB**

(56) References cited:
**DE-B-1 178 659**
**GB-A- 974 991**
**GB-A-2 138 083**

(73) Proprietor: **TOYOTA JIDOSHA KABUSHIKI KAISHA**
**1, Toyota-cho Toyota-shi**
**Aichi-ken 471 (JP)**

(72) Inventor: **Mizutani, Hitoshi**
**16, Oaza Kamigo Aza Osaka Togo-cho**
**Aichi-gun Aichi-ken (JP)**

(74) Representative: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2 (DE)**

Courier Press, Leamington Spa, England.

## Description

### BACKGROUND OF THE INVENTION

This invention relates to a limited slip differential for a vehicle (which is also called a differential locking and limiting device).

As is known, a conventional limited slip differential is of various types such as a pre-pressure type or a torque proportional type. Further, there have been proposed the limited slip differential as disclosed in Japanese Utility Model Publication Nos. 46-35772 and 49-23375 by the present applicant. DE-B-1 178 659 proposes a limited slip differential having a bevel gear train and a pair of friction clutches each located between one side gear and opposite internal surfaces of the differential case and wherein the side gears are slidable in axial direction to apply the corresponding clutch. According to differential rotation between the two axle shafts an internal pump defined by a hollow shaft supported on the pinion shaft of the slip differential and having an excenter portion cooperating with a double piston body engagement between the side gears and the differential casing is gradually increased by pressing together the friction clutches.

However, in the above-mentioned conventional limited slip differential, locking limitation of differential action of the differential is designed to be effected according to differential rotation created between right and left side gears in a differential gear train. Accordingly, there is a problem that the locking and limitation of differential action at an arbitral rotational ratio may not be attained, or a limiting torque for limiting the differential action may not be arbitrarily adjusted. Further, it is also impossible to lock or limit the differential action at an arbitral time. Because of this problem, it is impossible to expect the locking or limitation of the differential action according to various driving conditions dependent upon vehicle running conditions such as a driving torque of a ring gear, differential rotation of both the side gears and lateral gravitational acceleration of vehicle.

It is an object of the present invention to create a limited slip differential which enables an arbitral adjusting of the differential action.

This object is achieved according to the invention by a limited slip differential comprising the features of claim 1. With this arrangement, differential locking or limiting action may be arbitrarily obtained by controlling supply of the operating fluid to the chamber between both the pistons. Furthermore, it is possible to obtain an arbitral friction torque of the friction clutches by controlling the magnitude of a fluid pressure of the operating fluid and thereby limit the differential action by arbitral differential limiting torque or lock the differential action by controlling the fluid pressure of the operating fluid. As a result, the locking or limitation of arbitral limiting torque may be attained at an arbitral time, and it is possible to obtain a differential locking or limiting action by preferable limiting torque according to various driving conditions dependent upon vehicle running conditions such as a driving torque of the ring gear, differential rotation of both the side gears and lateral gravitational acceleration of the vehicle.

Advantageous modifications of the invention derive from the sub claims.

The invention will be more fully understood from the following detailed description and appended claims when taken with the drawings.

### BRIEF DESCRIPTION OF THE DRAWINGS

Fig. 1 is a schematic sectional view of the limited slip differential in a preferred embodiment of the invention;

Fig. 2 is an enlarged sectional view showing details of the pistons and associated parts thereof; and

Fig. 3 is an enlarged sectional view of the support portion of the axle shaft.

### DETAILED DESCRIPTION OF THE PREFERRED EMBODIMENT

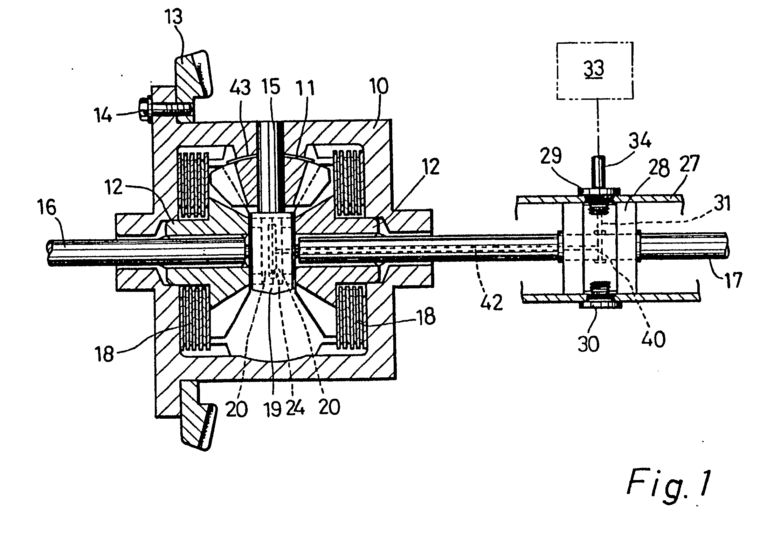

Referring to Fig. 1 which schematically shows a limited slip differential in section of a preferred embodiment, there is incorporated a differential gear train mainly composed of a differential pinion 11 (actually, plural pinions are incorporated as is known) and right and left side gears 12 in a differential case 10 as is known. A ring gear 13 is fastened to an outer side of the differential case 10 by bolts 14. Although the differential case 10 is shown as integrally formed, it is practically divided into two separate cases as is known, and both the separate cases are combined by bolts or the like after the differential gear train is incorporated. The ring gear 13 is meshed with a drive pinion of a drive shaft (not shown) so that a drive force from a drive source through the drive shaft may be transmitted to the ring gear 13.

The differential pinion is rotatably supported to a pinion shaft 15 fixed to the differential case as is known (actually, plural pinion shafts are incorporated). Each of the side gears 12 meshed with the differential pinion 11 is axially movably engaged with opposite end portions of right and left axle shafts 17 and 16 by splines. The other end portions of the axle shafts 16 and 17 are engaged with wheels. Accordingly, the drive force inputted to the ring gear 13 is transmitted through the differential gear train to both the axle shafts 16 and 17 to rotate the wheels.

There are provided friction clutches 18 between opposite surfaces of the differential case 10 and the side gears 12. The friction clutches 18 in this embodiment are selected from a known multiple plate friction clutch, and therefore detailed explanation thereof will be omitted.

The pinion shaft 15 is formed with an enlarged cylinder portion 19 positioned between both the side gears 12. Right and left end surfaces of the cylinder portion 19 are opposed to end surfaces of both the side gears 12. Right and left pistons 20 are incorporated in the cylinder portion 19.

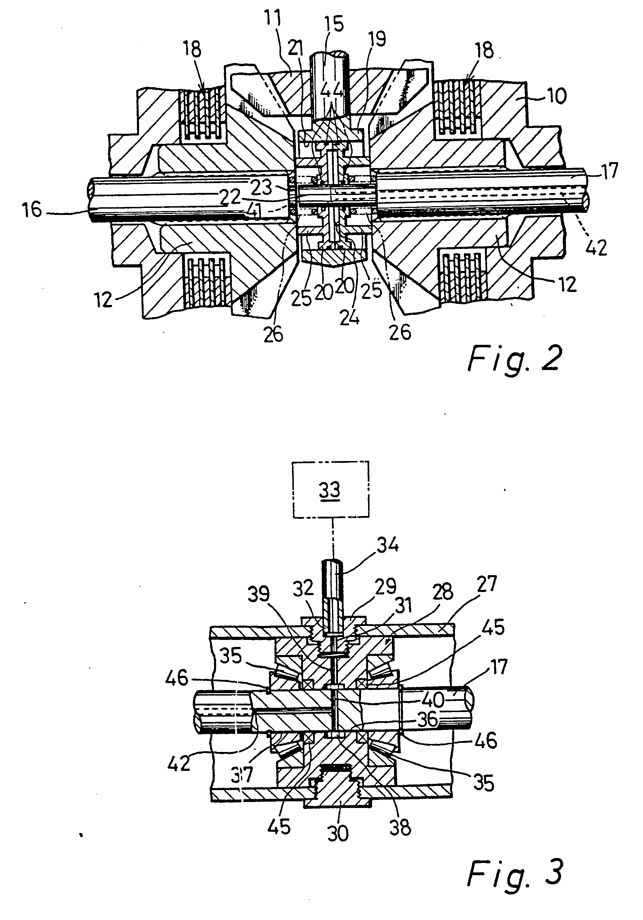

Referring to Fig. 2 which shows a detailed structure of the pistons as incorporated, the cylinder portion 19 of the pinion shaft 15 is formed with a cylindrical piston hole 21 substantially coaxial with both the side gears 12. The right axle shaft 17 is fixedly provided at its end with a guide shaft portion 22 coaxial therewith and opposed to an end of the left axle shaft 16. The left axle shaft 16 is formed at its end with a projection 23 substantially coaxial with the guide shaft portion 22 and having a substantially identical diameter thereof, and both ends of the guide shafts 22 and the projection 23 are opposed with a slight space defined.

The right and left pistons 20 which are formed in a ring-like shape are fitted to the guide shaft portion 22 so as to be slidable axially or along the guide shaft portion 22. Both the pistons 20 as shown are in their ultimate approaching position. An annular chamber 24 is defined between both inside peripheries of the pistons 20. Annular projections 25 are formed on both outside surfaces of the pistons 20. Each end of the projections 25 is in contact with opposite end surfaces of both the side gears 12. In the embodiment, even in the ultimate approaching position of both the pistons 20, the projections 25 are in contact with the side gears 12. However, in another embodiment, the projections 25 are slightly spaced from the side gears 12 in the ultimate approaching position of the pistons 20, while they come into contact with the side gears 12 when both the pistons 20 are outwardly moved.

Springs 26 fitted to the guide shaft portion 22 are interposed between the pistons 20 and the axle shafts 16 and 17 to bias the pistons 20 inwardly. A left-hand end of the left spring 26 is fitted to the projection 23 formed at an end of the left axle shaft 16.

The right axle shaft 17 is rotatably supported in a cylindrical axle housing 27 supported to a frame side of a vehicle.

Referring to Fig. 3 which partly shows a hydraulic circuit as formed in a support portion of the axle shaft 17 to the axle housing 27, the hydraulic circuit is communicated with the chamber 24, and an annular support member 28 which is formed in a sectional T-shape is fitted in the axle housing 27. Upper and lower plugs 29 and 30 are screwed from the outside of the axle housing 27, and are also screwed into the support member 28 at ends thereof thereby to fix the support member 28 to the axle housing 27. The upper plug 29 is formed with an axial communication hole 31 and a connection recess 32 opened at an upper end of the communication hole 31. The connection recess 32 is connected to an end of an oil supply pipe 34 for supplying a hydraulic oil from a hydraulic source 33 incorporated in the hydraulic circuit.

The axle shaft 17 is rotatably supported by tapered roller bearings 35 fitted to right and left shoulder portions of the support member 28. An inner circumferential surface 36 of the support member 28 is in substantially tight-contact with an outer circumferential surface 37 of the axle shaft 17. An annular oil groove 38 is formed at a central portion of the inner circumferential surface 36 of the support member 28. An oil passage 39 is formed in the support member 28 for communicating the oil groove 38 with the communication hole 31 of the upper plug 29.

The axle shaft 17 is formed with a radially opened oil passage 40 communicated with the oil groove 38 of the support member 28, and the guide shaft portion 22 is also formed with a radially opened oil passage 41 communicated with the chamber 24 as is seen in Fig. 2. Furthermore, an axial oil passage 42 communicated with both the oil passages 40 and 41 is formed at an axially central portion of the axle shaft 17 and the guide shaft portion 22. With this arrangement, the hydraulic oil supplied from the hydraulic source 33 to the oil supply pipe 34 is sequentially communicated from the communication hole 31 of the plug 29 through the oil passage 39 and the oil groove 38 of the support member 28 and the oil passages 40, 42 and 41 of the axle shaft 17 and guide shaft portion 22 to the chamber 24. The above-mentioned communication passage of the hydraulic oil corresponds to the oil passage as claimed in the present invention.

In the drawing, there are shown a washer 43 interposed between the differential case 10 and the differential pinion 11, seal rings 44 provided on the inner and outer circumferences of the pistons 20, oil seals 45 provided in the support member 28 and snap rings 46 fitted to the right axle shaft 17.

In operation, when no hydraulic oil is supplied from the hydraulic source 33 to the chamber 24 (inclusive of the case that hydraulic pressure is hardly applied), both the pistons 20 are in such a condition as to be biased inwardly by the springs 26 as shown in Fig. 1, and clutches 18 are separated from each other. As a result, there is hardly generated a friction torque of the friction clutches 18 between the differential case 10 and the side gears 12. Accordingly, in this condition, a locking or limiting operation with respect to differential action of the differential gear train is not exhibited.

On the other hand, when the hydraulic oil is supplied from the hydraulic source 33 to the chamber 24 (when hydraulic pressure is applied), both the pistons 20 are outwardly biased against the springs 26. Then, both the side gears 12 are outwardly moved by the projections 25. As a result, the friction clutches 18 are connected to generate a friction torque between the differential case 10 and both the side gears 12, thus exhibiting the locking or limiting operation with respect to differential action of the differential gear train by the friction torque. The hydraulic pressure of the hydraulic oil is controlled to provide the friction torque of the friction clutches 18 proportional to a magnitude of the hydraulic pressure and thereby provide a differential limiting torque having an arbitral magnitude.

Whether or not the pressure of the hydraulic oil is applied to the chamber 24, and controlling of the pressure of the hydraulic oil are carried out by a computer control, manual control or the like. It is possible to provide an optimal differential locking or limiting action according to various driving circumstances by controlling the hydraulic pressure in consideration of vehicle running conditions such as a driving torque of the ring gear, differential rotation of the side gears and lateral gravitational acceleration of the vehicle.

When the supply of the hydraulic oil is stopped (when the hydraulic pressure is reduced), both the pistons 20 are biased inwardly by the springs 26 thereby to be returned to an original position (See Fig. 1). At this time, the hydraulic oil in the chamber 24 is allowed to flow in a direction reversed as upon supplying and be returned to the hydraulic circuit including the hydraulic source 33.

Although the oil passage for supplying the hydraulic oil to the chamber is provided in the axle shaft 17 in the above-mentioned embodiment, an axial oil communication hole is formed in the pinion shaft 15, and the cylinder portion 19 is communicated with the chamber 24 at an end portion thereof, while communicated with the oil supply pipe 34 at the other end portion thereof thereby to provide an oil passage as defined in the invention in the pinion shaft 15.

It should be appreciated that pressurized air or gas may be used in substitution for the hydraulic oil.

## Claims

1. A limited slip differential including:

a differential gear train mainly composed of differential pinions (11) and side gears (12) incorporated in a differential case (10), said side gears (12) being connected to opposite end portions of axle shafts (16, 17) by splines;

pinion shafts (15) fixed to said differential case (10) for rotatably supporting said differential pinions (11);

and friction clutches (18) provided between opposite surfaces of said differential case (10) and said side gears (12), said side gears (12) being slidable in an axial direction of said axle shafts (16, 17);

characterized by a cylinder portion (19) provided at said pinion shafts (15) and positioned between said side gears (12);

a pair of pistons (20) provided in said cylinder portion (19) and adapted to be slided in an axial direction of said axle shafts (16, 17), said pistons (20) being inwardly biased by a biasing means (26);

a chamber (24) defined between said pistons (20); and

a fluid passage (40, 41, 42) communicated with said chamber (24) for supplying an operating fluid from a fluid source in a fluid circuit to said chamber (24), wherein, when said operating fluid is supplied to said chamber (24), said side gears (12) are outwardly moved by said pistons (20) to change a friction torque of said friction clutches (18).

2. The limited slip differential as defined in claim 1, wherein one (17) of said axle shafts (16, 17) is provided at an end thereof with a guide shaft portion (22) which is coaxial therewith and extends toward an opposite end of the other axle shaft (16), and the other axle shaft (16) is provided at an end thereof with a projection (23) which is substantially coaxial with said guide shaft portion (22) and has a diameter substantially identical with that of said guide shaft portion (22), opposed ends of said guide shaft portion (22) and said projection (23) being slightly spaced from each other.

3. The limited slip differential as defined in claim 2, wherein said pistons (20) are adapted to be axially slided on said guide shaft portion (22).

4. The limited slip differential as defined in claim 1, wherein said pistons (20) are formed with annular projections (25) extending outwardly from opposed surfaces thereof, and free ends of said annular projections (25) are in contact with opposed end surfaces of said side gears (12).

5. The limited slip differential as defined in claim 2, wherein said biasing means are coil springs (26) interposed between opposed ends of said axle shafts (16, 17) and fitted to said guide shaft portion (22).

6. The limited slip differential as defined in claim 1, wherein a part of said fluid circuit is formed at a supported portion (28) of said one (17) of said axle shafts (16, 17) to be supported at an axle housing (27).

7. The limited slip differential as defined in claim 6, wherein said fluid passage comprises a radial fluid passage (39) formed in said support portion (28) and communicated with said fluid source (33), an axial fluid passage (42) formed in said one (17) of said axle shafts (16, 17) and communicated with said radial fluid passage (39), and another radial fluid passage (41) formed in said guide shaft (22) and communicated with said axial fluid passage (42) and said chamber (24).

## Patentansprüche

1. Sperrdifferential:
- mit einem Differential-Kraftübertragungsweg, der in der Hauptsache aus Ausgleichsritzeln (11) sowie Achswellenkegelrädern (12), die in ein Differentialgehäuse (10) eingegliedert sind, besteht, wobei die Achswellenkegelräder (12) mit einander gegenüberliegenden Endabschnitten von Achswellen (16, 17) durch Keilnuten verbunden sind,
- mit am Differentialgehäuse (10) festen, die Ausgleichsritzel (11) drehbar lagernden Ritzelwellen (15), und
- mit zwischen einander gegenüberliegenden Flächen des Differentialgehäuses (10) sowie der Achswellenkegelräder (12), die in axialer Richtung der Achswellen (16, 17) verschiebbar sind, angeordneten Lamellenkupplungen (18),
gekennzeichnet
- durch ein an den Ritzelwellen (15) vorgesehenes, zwischen den Achswellenkegelrädern (12) angeordnetes Zylinderteil (19),
- durch ein Paar von in dem Zylinderteil (10) befindlichen Kolben (20), die in axialer Richtung der Achswellen (16, 17) verschiebbar sowie ein-

wärts durch Druckbelastungseinrichtungen (28) belastet sind,

- durch eine zwischen den Kolben (20) abgegrenzte Kammer (24) und

- durch einen mit der Kammer (24) in Verbindung stehenden Fluidkanal (40, 41, 42) zur Zufuhr eines Arbeitsfluids von einer Fluidquelle in einem Fluidkreis zu der Kammer (24), so daß bei einer Zufuhr des Arbeitsfluids zu der Kammer (24) die Achswellenkegelräder (12) durch die Kolben (20) nach auswärts bewegt werden, um ein Reibungsdrehmoment der Lamellenkupplungen zu verändern.

2. Sperrdifferential nach Anspruch 1, dadurch gekennzeichnet, daß die eine (17) ader Achswellen (16, 17) an einer Stirnseite mit einem Führungswellenstück (22) versehen ist, das zur Achswelle koaxial ist sowie zur entgegengesetzten Stirnseite der anderen Achswelle (16) hin sich erstreckt, daß die andere Achswelle (16) an einer Stirnseite mit einem Ansatz (23) versehen ist, der im wesentlichen koaxial zum Führungswellenstück (22) ist sowie einen zum Durchmesser des Führungswellenstücks (22) im wesentlichen identischen Durchmesser hat, und daß die einander gegenüberliegenden Stirnseiten des Führungswellenstücks (22) sowie des Ansatzes (23) geringfügig voneinander beabstandet sind.

3. Sperrdifferential nach Anspruch 2, dadurch gekennzeichnet, daß die Kolben (20) am Führungswellenstück (22) axial verschiebbar sind.

4. Sperrdifferential nach Anspruch 1, dadurch gekennzeichnet, daß die Kolben (20) mit von ihren gegenüberliegenden Flächen auswärts sich erstreckenden Ringkragen (25) ausgestattet und die freien Stirnkanten dieser Ringkragen (25) mit gegenüberliegenden Stirnflächen der Achswellenkegelräder (12) in Anlage sind.

5. Sperrdifferential nach Anspruch 2, dadurch gekennzeichnet, daß die Druckbelastungseinrichtungen zwischen gegenüberliegenden Enden der Achswellen (16, 17) eingesetzte und am Führungswellenstück (22) angebrachte Schraubenfedern (26) sind.

6. Sperrdifferential nach Anspruch 1, dadurch gekennzeichnet, daß ein Teil des Fluidkreises an einem von einem Achsgehäuse (27) zu lagernden Stützglied (28) der einen (17) der Achswellen (16, 17) ausgebildet ist.

7. Sperrdifferential nach Anspruch 6, dadurch gekennzeichnet, daß der Fluidkanal einen radialen, im Stützglied (28) ausgebildeten sowie mit der Fluidquelle verbundenen Fluidkanal (39), einen axialen, in der einen (17) der Achswellen (16, 17) ausgebildeten sowie mit dem radialen Fluidkanal (39) verbundenen Fluidkanal (42) und einen weiteren radialen, im Führungswellenstück (22) ausgebildeten sowie mit dem axialen Fluidkanal (42) und der Kammer (24) verbundenen Fluidkanal (41) umfaßt.

## Revendications

1. Un différentiel à glissement limité comprenant:

- un train d'engrenages différentiel composé principalement de pignons satellites (11) et de roues dentées latérales (12) incorporés dans un boîtier de différentiel (10), lesdites roues dentées latérales (12) étant reliées par des cannelures aux parties d'extrémité opposées des arbres de roue (16, 17);

- des arbres de pignons (15) (ou axes de satellites) fixés audit boîtier de différentiel (10) pour porter de façon rotative lesdits pignons satellites (11); et

- des embrayages à friction (18) ménagés entre des surfaces opposées dudit boîtier de différentiel (10) et desdites roues dentées latérales (12), lesdites roues dentées latérales (12) pouvant coulisser dans le sens axial desdits arbres de roue (16, 17);

caractérisé par:

- une partie formant un cylindre (19) ménagée sur lesdits arbres de pignons (15) et placée entre lesdites roues dentées latérales (12);

- une paire de pistons (20) montés dans ladite partie formant un cylindre (19) et aptes à coulisser dans la direction axiale desdits arbres de roue (16, 17), lesdits pistons (20) étant repoussés vers l'intérieur par un moyen de poussée (26);

- une chambre (24) délimitée entre lesdits pistons (20); et

- un passage de fluide (40, 41, 42) communiquant avec ladite chambre (24) pour alimenter en fluide d'actionnement, venant d'une source de fluide dans un circuit de fluide, ladite chambre (24) dans lequel, lorsque ledit fluide d'actionnement est fourni à ladite chambre (24), lesdites roues dentées latérales (12) sont déplacées vers l'extérieur par lesdits pistons (20) pour faire varier le couple de friction desdits embrayages à friction (18).

2. Le différentiel à glissement limité selon la revendication 1, dans lequel l'un (17) desdits arbres de roue (16, 17) est muni à l'une de ses extrémités d'une partie d'arbre de guidage (22) qui lui est coaxiale et qui s'étend en direction d'une extrémité opposée de l'autre arbre de roue (16), et dans lequel l'autre arbre de roue (16) est muni à une de ses extrémités d'une saillie (23) qui est sensiblement coaxiale à ladite partie d'arbre de guidage (22) et qui présente un diamètre sensiblement identique à celui de ladite partie d'arbre de guidage (22), les extrémités opposées de ladite partie d'arbre de guidage (22) et ladite saillie (23) étant légèrement espacées l'une de l'autre.

3. Le différentiel à glissement limité selon la revendication 2, dans lequel lesdits pistons (20) sont aptes à coulisser axialement sur ladite partie d'arbre (22) de guidage.

4. Le différentiel à glissement limité selon la revendication 1, dans lequel lesdits pistons (20) comportent des saillies annulaires (25) qui s'étendent vers l'extérieur à partir de leurs surfaces qui se font face, et dans lequel les extrémités libres desdits saillies annulaires (25) sont en contact avec les surfaces d'extrémité opposées desdites roues dentées coniques (12).

5. Le différentiel à glissement limité selon la revendication 2, dans lequel lesdits moyens de poussée sont des ressorts hélicoîdaux (26) placés entre les extrémités desdits arbres de roue (16, 17) qui se font face et qui sont montés sur ladite partie d'arbre de guidage (22).

6. Le différentiel à glissement limité selon la revendication 1, dans lequel une partie dudit circuit de fluide est formée dans une partie supportée (28) de l'un (17) desdits arbres de roue (16, 17), et destinée à être portée par un logement d'essieu (27).

7. Le différentiel à glissement limité selon la revendication 6, dans lequel ledit passage de fluide comprend un passage de fluide radial (39) formé dans ladite partie de support (28) et communiquant avec ladite source de fluide (33), un passage axial de fluide (42) formé dans l'un (17) desdits arbres de roue (16, 17) et communiquant avec ledit passage radial (39) pour fluide, et un autre passage radial de fluide (41) formé dans ledit arbre de guidage (22) et relié audit passage axial (42) fluide et ladite chambre (24).

Fig.1

*Fig. 2*

*Fig. 3*